# EUROPÄISCHE PATENTSCHRIFT

(11) **EP 3 314 141 B1**
(45) Veröffentlichungstag und Bekanntmachung des Hinweises auf die Patenterteilung: **06.11.2019**
(21) Anmeldenummer: 16728297.9
(22) Anmeldetag: 08.06.2016
(51) Int. Cl.: F16D 65/10

(54) **BREMSTROMMEL**
BRAKE DRUM
TAMBOUR DE FREIN

(30) Priorität: 29.06.2015 DE 102015212017
(43) Veröffentlichungstag der Anmeldung: 02.05.2018
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2016/063016
(87) Internationale Veröffentlichungsnummer: WO 2017/001157

(56) Entgegenhaltungen:
- WO-A1-99/00607
- FR-A1- 2 734 195
- US-A1- 2004 000 386
- US-A1- 2005 167 214
- US-A1- 2009 056 134

## Beschreibung

Die vorliegende Erfindung betrifft eine Bremstrommel insbesondere eine Bremstrommel eines Nutzfahrzeugs, welche aus einem Mantelbereich und einem Anbindungsbereich besteht.

Bremstrommeln der in Rede stehenden Art sind aus dem Stand der Technik hinlänglich bekannt. Beispielsweise existieren Bremstrommeln, die aus einem Aluminium-Verbund-Werkstoff hergestellt sind, bei welchen Aluminium im Druckgussverfahren um einem porösen Keramikkern gegossen wird. Problematisch bei einem derartigen System ist jedoch, dass die Herstellung des Keramikkerns sowie das Aluminiumdruckgussverfahren sehr aufwendig und teuer sind. Darüber hinaus sind Bremstrommeln bekannt, bei welchen Keramikpartikel vor dem Vergießen mit der flüssigen Aluminiumlegierung vermischt werden. Problematisch bei derartigen Systemen ist jedoch, dass die Keramikpartikel nicht gezielt im Bereich der späteren Verschleißfläche angeordnet werden, sondern sich im gesamten Gussteil verteilt wieder finden. Dies führt dazu, dass im hoch beanspruchten Anbindungsbereich der Bremstrommel am Fahrzeug ein Materialversagen stattfinden kann. Im Übrigen ist es nicht möglich, einen hohen Keramikanteil zu verwenden, sodass ein schlechteres Verschleißverhalten die Folge ist.

US 2005/0167214 A1 betrifft eine Bremstrommel mit einem Mantelbereich 31 und einem Anbindungsbereich, wobei der Anbindungsbereich zu 38% eine Keramik in einem Metall und der Mantelbereich zu 20% Keramik in einem Metall umfasst.

US 2009/0056134 A1 betrifft einen gegossenen Torsionsdämpfer mit einer ringförmigen Reibfläche.

WO 99/00607 betrifft eine zusammengesetzte Bremstrommel für einen Motor eines Fahrzeuges oder dergleichen. Die Bremstrommel umfasst dabei einen metallischen Trommelabschnitt, einen Stahltrommelrücken und eine Montageseite.

US 2004/0000386 A1 betrifft gegossene Artikel, insbesondere Bremstrommeln, welche eine Metallmatrix umfassen.

FR 2 734 195 betrifft ein Verfahren zur Herstellung eines Elements aus einer Aluminiumlegierung, welches eine Reibfläche aufweist.

DE 10 2011 54484 A1 betrifft eine Bremstrommel für Fahrzeuge, wobei ein aus Aluminium hergestellter Grundkörper und ein aus Stahl hergestellter Reibkörper unabhängig voneinander hergestellt werden und anschließend stoffschlüssig durch Reibschweißen miteinander verbunden werden. Beim Reibschweißen gehen beide Materialien in einen teilweise schmelzflüssigen Zustand über, so dass überschüssiges Aluminium in Nuten des Reibkörpers strömt und dort eine Verklammerungsstruktur durch die Hinterschneidungen bildet. Der Grundkörper wird aus einer Aluminiumguss- oder Knetlegierung mit einem Kupfergehalt von kleiner als 0,05% hergestellt. Der Grundkörper weist eine Umfangswand und eine sich radial erstreckende Wand auf. Die Umfangswand ist mit dem Mantelbereich und die sich radial erstreckende Wand mit dem Anbindungsbereich gemäß der vorliegenden Anmeldung gleichzusetzen.

Es ist daher Aufgabe der vorliegenden Erfindung, eine Bremstrommel vorzusehen, welche insbesondere im Nutzfahrzeugbereich Anwendung findet, die einen hohen Verschleißwiderstand hat, eine lange Lebensdauer gewährleistet und einfach und günstig herstellbar ist.

Diese Aufgabe wird durch eine Bremstrommel insbesondere eines Nutzfahrzeugs, mit den Merkmalen des Anspruchs 1 gelöst. Bevorzugte Ausführungsformen ergeben sich aus den abhängigen Ansprüchen.

Erfindungsgemäß ist eine Bremstrommel, insbesondere eines Nutzfahrzeuges, vorgesehen, umfassend einen Mantelbereich, welcher eine Reibfläche aufweist, die rotationssymmetrisch zu einer Rotationsachse angeordnet ist, einen Anbindungsbereich, welcher einen Montageabschnitt aufweist, wobei der Mantelbereich und der Anbindungsbereich aus unterschiedlichen Materialien ausgebildet und miteinander verbunden sind. Der Mantelbereich weist zweckmäßigerweise eine Reibfläche auf, welche ausgelegt ist, mit einem Bremsbelag einer Bremsbacke in Kontakt gebracht zu werden. Dementsprechend muss der Mantelbereich und insbesondere dessen Reibfläche aus besonders steifen und abriebfesten Material bestehen. Um ein optimales Bremsverhalten zu gewährleisten ist die Reibfläche rotationssymmetrisch zu einer Rotationsachse angeordnet, welche dem Wesentlichen der Rotationsachse der Fahrzeugachse entspricht. Der Mantelbereich ist im wesentlichen zylinderförmig ausgebildet, wobei eine Stirnseite des Mantelbereichs zweckmäßigerweise einen ersten Verbindungsabschnitt zur Verbindung mit dem Anbindungsbereich aufweist. Um die Bremstrommel am Fahrzeug anordnen bzw. festlegen bzw. montieren zu können, weist diese einen Anbindungsbereich mit einem Montageabschnitt auf, der zur Festlegung der Bremstrommel an einem Fahrzeugteil dient. Insbesondere kann der Montageabschnitt mit Löchern oder Bolzen versehen sein, um die Bremstrommel an einer sich um die Fahrzeugachse drehenden Radnabe anordnen zu können. Der Anbindungsbereich erstreckt sich zweckmäßigerweise nicht oder nur geringfügig in den zylindrischen Teil des Mantelbereichs hinein, wobei "geringfügig" insbesondere weniger als das 0,1-fache der Erstreckung des Mantelbereichs entlang der Rotationsachse ist. Von besonderer Bedeutung ist, dass der Mantelbereich und der Anbindungsbereich aus unterschiedlichen Materialien ausgebildet und miteinander verbunden sind. Unterschiedliche Materialien sind hierbei derart zu verstehen, dass die Gesamtzusammensetzung von Mantelbereich und Anbindungsbereich sich unterscheidet. So ist es durchaus möglich, dass der Mantelbereich ein Verbundwerkstoff aus Aluminium und einem weiteren, bestimmten ersten Element ist, wohingegen der Anbindungsbereich aus einer Legierung aus Aluminium und einem anderen zweiten Element besteht. Durch das Ausbilden von Mantelbereich und Anbindungsbereich aus unterschiedlichen Materialien kann somit gewährleistet werden, dass dem jeweiligen Bereich diejenigen Materialien zugeordnet werden, welche besonders gut die geforderten Eigenschaften erfüllen. So ist es daher möglich, im Mantelbereich ein solches Material vorzusehen, welches besonders abriebfest und hitzebeständig ist, wohingegen im Anbindungsbereich ein Material vorgesehen werden kann, welches fähig ist, besonders hohe Kräfte aufzunehmen. Um die erfindungsgemäße Bremstrommel auszubilden sind der Mantelbereich und der Anbindungsbereich miteinander verbunden. Die Verbindung kann hierbei reversibel oder irreversibel über einen Stoffschluss ausgebildet werden. Der Begriff "irreversibel" ist hierbei derart zu interpretieren, dass eine Trennung von Mantelbereich und Anbindungsbereich nur möglich ist, indem eine Zerstörung der Bremstrommel erfolgt.

Vorzugsweise sind der Mantelbereich und der Anbindungsbereich getrennt voneinander hergestellt. In anderen Worten sind der Mantelbereich und der Anbindungsbereich vor deren Verbindung miteinander getrennt voneinander bzw. eigenständig hergestellt. So ist es besonders vorteilhafterweise möglich, eine Art Baukastensystem zu ermöglich, bei welchem eine Vielzahl von Varianten von Mantelbereichen und eine weitere Vielzahl von Varianten von Anbindungsbereichen getrennt voneinander hergestellt werden können, die dann nach Bedarf miteinander verbunden werden können. Besonders vorteilhafterweise können der Mantelbereich sowie der Anbindungsbereich mittels eines Urformverfahrens, beispielsweise durch Gießen, hergestellt sein. Bei einer voneinander getrennten Herstellung bilden daher der Mantelbereich und der Anbindungsbereich während des Herstellungsprozesses keine Einstückigkeit aus, sondern sind voneinander separate bzw. getrennte Teile, welche erst in einem anschließenden Verfahrensschritt miteinander verbunden werden.

Vorteilhafterweise ist der Mantelbereich zumindest teilweise, vorzugsweise vollständig, aus einem Metall-Matrix-Verbundwerkstoff, insbesondere Aluminium-Keramik-Verbundwerkstoff, ausgebildet. So kann insbesondere der Teil des Mantelbereichs, welcher die Reibfläche beinhaltet, aus einem Metall-Matrix-Verbundwerkstoff ausgebildet sein, wobei der gegenüber liegende, in der Regel nach außen orientierte Teil bzw. Fläche des Mantelbereichs, lediglich aus Metall ausgebildet sein kann und keinen Verbundwerkstoff beinhalten muss. Besonders bevorzugt ist jedoch der gesamte Mantelbereich vollständig aus einem Metall-Matrix-Verbundwerkstoff gebildet, sodass der Mantelbereich überwiegend, insbesondere zu mehr als 90% und besonders vorzugsweise zu vollständig aus einem Metall-Matrix-Verbund ausgebildet ist. Hierbei bildet das Metall vorteilhafterweise eine zusammenhängende Matrix aus, wobei beispielsweise die Keramik eine Verstärkungsphase bildet. Derartige keramische Partikel können beispielsweise Siliciumcarbid sein. Als Verbundwerkstoff können gleichfalls auf Kohlenstoff basierende Kurz- oder Endlosfasern oder Schäume mit offener Porosität zum Einsatz kommen.

In einer besonders bevorzugten Ausführungsform ist der Mantelbereich zumindest teilweise, vorzugsweise vollständig, aus einem Material ausgebildet, das aus einer diskontinuierlichen Phase, vorzugsweise aus Keramikpartikeln, und einer kontinuierlichen Phase, vorzugsweise aus Aluminium, ausgebildet. Die diskontinuierliche Phase bildet somit die Verstärkungsphase aus und ist insbesondere aus losen Keramikpartikeln oder Kohlenstoffpartikeln oder Kohlenstofffasern ausgebildet. Diese werden besonders zweckmäßigerweise in eine Metallschmelze, beispielsweise aus Aluminium oder Titan, eingebracht. Hierdurch wird eine besonders vorteilhaft homogene Verteilung der diskontinuierlichen Phase, insbesondere der Keramikpartikel, ermöglicht, was zu besonders betriebssicheren Produkteigenschaften führt.

Zweckmäßigerweise liegt das Volumen-Prozentverhältnis von Keramikpartikeln zu Aluminium im Bereich von 0,4 bis 4, vorzugsweise 1 bis 4 und besonders vorzugsweise 1,5 bis 4. Hierdurch kann das Verschleißverhalten verbessert werden und somit die Lebensdauer der Bremstrommel verlängert werden. Dies gilt insbesondere im Vergleich zu aus dem Stand der Technik bekannten, einstückig gegossenen Bremstrommeln mit Keramikpartikeln, bei welchen der Keramikanteil aufgrund des einstückigen Gusses auch des Anbindungsbereichs sehr viel niedriger liegt. Besonders zweckmäßig ist, wenn der Mantelbereich benachbart zur Reibfläche ein Volumen-Prozentverhältnis von Keramikpartikeln zu Aluminium im Bereich von 2,8 bis 4 aufweist, welches radial (d. h. senkrecht zur Rotationsachse) abnimmt und benachbart zur der Reibfläche gegenüberliegenden Außenseite im Bereich von 2,8 bis 4 liegt.

Vorzugsweise ist der Anbindungsbereich zumindest teilweise, vorzugsweise vollständig, aus einem homogenen Material, vorzugsweise Aluminium, Stahl oder einer Legierung, ausgebildet. Der Anbindungsbereich kann somit teilweise, insbesondere im Bereich des Montageabschnitts, vorzugsweise überwiegend und weiter vorzugsweise zu mindestens 90% und besonders vorzugsweise vollständig aus einem homogenen Material ausgebildet sein. Insbesondere bei einer vollständigen Ausbildung des Anbindungsbereichs aus homogenen Material ist dies besonders kostengünstig herstellbar und weist besonders langlebige Produkteigenschaften auf. "Homogen" bedeutet in diesem Zusammenhang, dass der Anbindungsbereich aus einem Material gleicher Zusammensetzung ausgebildet ist. So kann der Anbindungsbereich aus einem Metall, wie Aluminium, Stahl oder einer Legierung derselben ausgebildet sein. Alternativ kann der Anbindungsbereich auch aus Kunststoff oder einem Faserverbundwerkstoff ausgebildet sein.

Vorzugsweise weist der Mantelbereich einen ersten Verbindungsabschnitt und der Anbindungsbereich einen zweiten Verbindungsbereich auf, über welche der Mantelbereich und der Anbindungsbereich kraft- und/oder form- und/oder stoffschlüssig miteinander verbunden sind. Die Verbindungsabschnitte stellen somit insbesondere die Kontaktabschnitte zwischen Anbindungsbereich und Mantelbereich dar. Die Verbindung von Mantelbereich und Anbindungsbereich kann hierbei über Kraftschluss und/oder Formschluss und/oder Stoffschluss erfolgen. Eine stoffflüssige Verbindung führt zu einer besonders hohen Betriebssicherheit, während eine kraft- und formflüssige Verbindung vorteilhafterweise auch reversibel gestaltet sein kann, sodass, beispielsweise nach Abnutzung des Mantelbereichs, dieser durch einen neuen Mantelbereich ausgetauscht werden kann und der Anbindungsbereich wieder verwendet werden kann.

Zweckmäßigerweise sind der erste und der zweite Verbindungsabschnitt über eine Verschweißung stoffschlüssig miteinander verbunden. Besonders vorteilhaft wird die stoffschlüssige Verbindung durch ein Reibschweißverfahren, insbesondere ein Rotationsreibschweißverfahren, hergestellt. Es ist jedoch auch denkbar, andersartige Schweiß oder Lötverbindungen vorzusehen.

Weiterhin zweckmäßigerweise sind der erste und der zweite Verbindungsabschnitt kraft- und formschlüssig, insbesondere über Verbindungsmittel, miteinander verbunden. Die Verbindungsmittel können hierbei als separate Elemente, beispielsweise Schrauben oder Bolzen, vorgesehen seien, sodass beispielsweise im Anbindungsbereich eine Vielzahl von Löchern, welche von Schraubbolzen durchgriffen werden können, vorgesehen sind, zu denen mit einem Gewinde versehende Ausnehmungen im Mantelbereich angeordnet sind, in welche die Schraubbolzen eingreifen können. Auch ist es möglich, die Verbindungsabschnitte miteinander zu verpressen. Hierbei kann der Anbindungsbereich beispielsweise thermisch erwärmt werden, während der Mantelbereich gekühlt wird, sodass diese ineinander führbar sind und nach Temperaturangleichung eine Presspassung miteinander eingehen. Auch ist möglich, dass am Anbindungsbereich und/oder Mantelbereich in den jeweiligen Verbindungsabschnitten eine Hinterschneidung vorgesehen ist, sodass eine kraft- und formschlüssige Verbindung gegeben ist.

Vorzugsweise weisen der erste Verbindungsabschnitt eine erste Verbindungsfläche und der zweite Verbindungsabschnitt eine zweite Verbindungsfläche auf, wobei die Verbindungsflächen vorzugsweise im Wesentlichen kongruent zueinander ausgebildet sind. Die Verbindungsflächen stellen somit zweckmäßigerweise die Kontaktflächen zwischen Mantelbereich und Anbindungsbereich dar. Insbesondere bei einer formschlüssigen Verbindung sind die Verbindungsflächen im Wesentlichen parallel bzw. kongruent bzw. passend zueinander ausgebildet. Insbesondere bei einer stoffschlüssigen Verbindung müssen die Verbindungsflächen nicht kongruent bzw. fluchtend zueinander ausgebildet sein, sondern können auch zueinander derart geneigt ausgebildet sein, dass diese einen Spalt, beispielsweise in Form eines V's, zueinander ausbilden, welcher von einem Schweißgut ausgefüllt werden kann.

In einer bevorzugten Ausführungsform erstrecken sich die Verbindungsflächen senkrecht und/oder parallel und/oder geneigt zur Rotationsachse. Die Verbindungsflächen sind dann zur Rotationsachse geneigt, wenn sich diese in einem Winkel ungleich 0° oder 90° zur Rotationsachse erstrecken. Die geneigte Ausbildung der Verbindungsflächen ist insbesondere bei einer Schweißverbindung bevorzugt. Gleiches gilt für die Anordnung der Verbindungsflächen senkrecht zur Rotationsachse, da sich diese besonders gut über ein Reibschweißverfahren miteinander verbinden lassen. Bei einer kraft- und formschlüssigen Verbindung von erstem und zweitem Verbindungsabschnitt hat sich eine Konfiguration von Verbindungsflächen als besonders vorteilhaft erwiesen, bei welcher die Verbindungsflächen die Form einer Stufe oder einer Hinterschneidung ausbilden und somit nicht nur ausschließlich senkrecht oder parallel oder geneigt zur Rotationsachse ausgebildet sind, sondern eine Kombination der vorstehend genannten Orientierungen in sich vereinen.

Vorteilhafterweise liegt das Verhältnis der Erstreckung des Anbindungsbereichs zu der des Mantelbereichs entlang der Rotationsachse zwischen 0,05 bis 0,6, vorzugsweise zwischen 0,1 bis 0,5 und besonders vorzugsweise zwischen 0,17 bis 0,4. Bei stark ansteigenden Anbindungsbereichen, das heißt bei Anbindungsbereichen, welche eine geringe Neigung zur Senkrechten der Rotationsachse aufweisen, hat sich ein Verhältnis in unterem Bereich von 0,05 bis 0,2 als besonders vorteilhaft erwiesen. Bei sehr flach ansteigenden Anbindungsbereichen, das heißt Anbindungsbereichen deren Neigung zur Senkrechten zur Rotationsachse größer 25° ist, hat sich ein Verhältnis im oberen Wertebereich zwischen 0,4 bis 0,6 als besonders vorteilhaft erwiesen. Eine besonders vorteilhafte Positionierung des Verbindungsbereichs zwischen Anwendungsbereich und Mantelbereich hat sich bei einem Verhältnis zwischen 0,1 bis 0,5 ergeben, da hierdurch ein gutes Gleichgewicht zwischen auf die Verbindungsstelle zwischen Anbindungsbereich und Mantelbereich wirkenden Biegemomenten und Torsionsmomenten gegeben ist, ohne die Breite der Reibflächen (das heißt Erstreckung der Reibfläche entlang der Rotationsachse) unnötig einzuschränken.

Weitere Merkmale und Eigenschaften der vorliegenden Erfindung ergeben sich aus der nachfolgenden Beschreibung von bevorzugten Ausführungsformen mit Bezug auf die beigefügten Figuren. Es zeigen:
- Figur 1: eine Schnittansicht eines Teils einer bevorzugten Ausführungsform der erfindungsgemäßen Bremstrommel.
- Figur 2: Schnittansichten von Teilen dreier verschiedener bevorzugter Ausführungsformen der erfindungsgemäßen Bremstrommel.
- Figur 3: eine Schnittansicht eines Teils einer weiteren bevorzugten Ausführungsform der erfindungsgemäßen Bremstrommel.

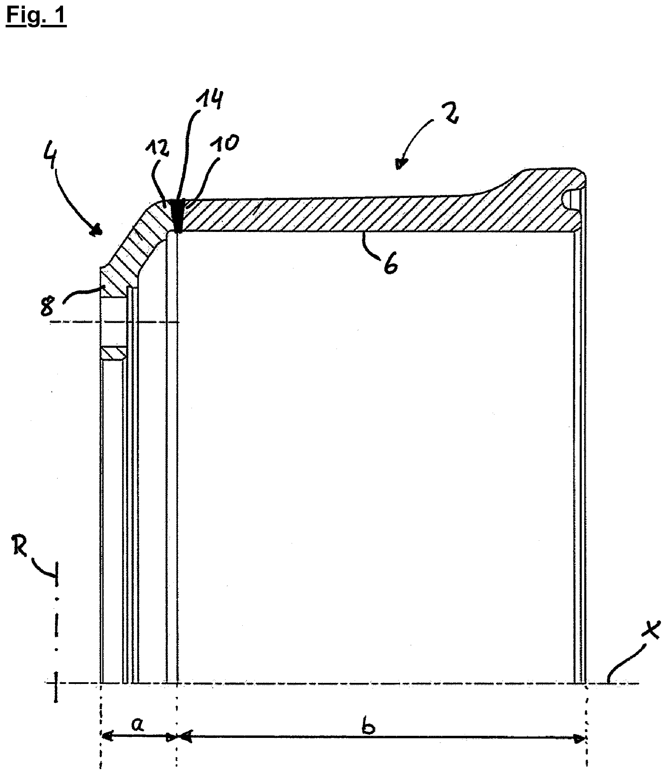

In Figur 1 ist eine Querschnittsansicht eines Teils einer ersten bevorzugten Ausführungsform der erfindungsgemäßen Bremstrommel dargestellt. Diese besteht aus einem Mantelbereich 2 und einem Anbindungsbereich 4. Der Mantelbereich 2 und der Anbindungsbereich 4 sind aus unterschiedlichen Materialien ausgebildet und originär getrennt voneinander hergestellt. Um die erfindungsgemäße Bremstrommel auszubilden sind der Mantelbereich 2 und der Anbindungsbereich 4 miteinander verbunden.

Der Mantelbereich 2 weist eine Reibfläche 6 auf, die ausgelegt ist, mit einem nicht dargestellten Bremsbelag in Eingriff zu gelangen. Hierfür ist die Reibfläche 6 rotationssymmetrisch um die Rotationsachse x angeordnet.

Der Anbindungsbereich 4 weist einen Montageabschnitt 8 auf, um die Bremstrommel an einem Fahrzeugteil, insbesondere einer sich um die Fahrzeugachse drehenden Radnabe zu befestigen. Der Montageabschnitt 8 kann hierbei Durchgangslöcher zur Befestigung von Radbolzen aufweisen.

Um den Mantelbereich 2 und den Anbindungsbereich 4 miteinander zu verbinden, weist der Mantelbereich 2 einen ersten Verbindungsabschnitt 10 und der Anbindungsbereich 4 einen zweiten Verbindungsabschnitt 12 auf. Diese umfassen entsprechende Verbindungsflächen, welche in der dargestellten Ausführungsform zueinander geneigt sind und somit einen Spalt in Form eines V's ausbilden, über welchen eine Verschweißung 14 des Mantelbereichs 2 und des Anbindungsbereichs 4 vorgesehen ist.

Es hat sich als zweckmäßig erwiesen, dass das Verhältnis der Erstreckung a des Anbindungsbereichs zu der Erstreckung b des Mantelbereichs entlang der Rotationsachse x zwischen 0,05 bis 0,6 liegt.

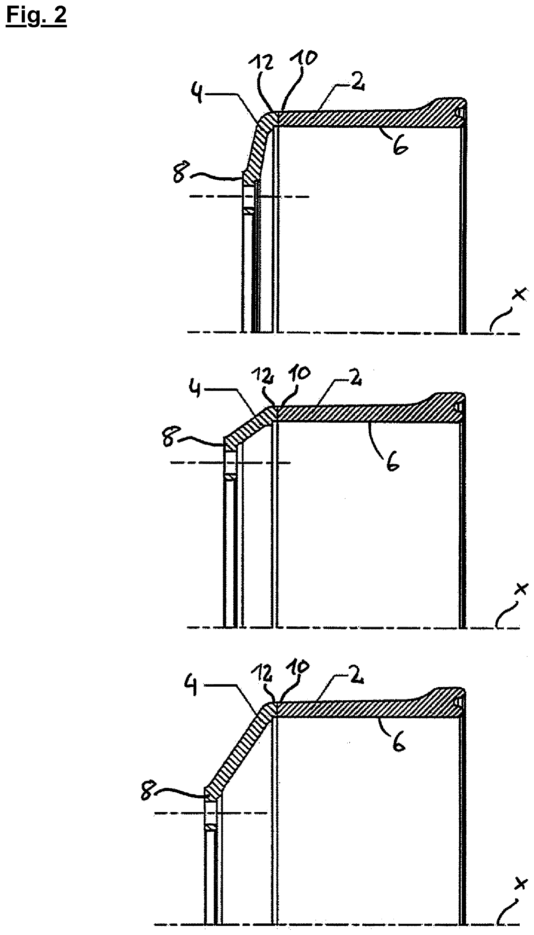

Indem der Mantelbereich 2 und der Anbindungsbereich 4 getrennt voneinander hergestellt und daran anschließend miteinander verbunden sind, ist es möglich, eine Vielzahl von verschiedenen Mantelbereichen 2 und eine Vielzahl von unterschiedlichen Anbindungsbereichen 4 vorzusehen und diese im Sinne eines Baukastensystems zusammenzusetzen, wie dies in Figur 2 dargestellt ist. Wie ersichtlich ist an ein und demselben Typ Mantelbereich zwei jeweils ein unterschiedlicher Anbindungsbereich 4 vorgesehen. Die obere, in Figur 2 dargestellte Bremstrommel zeigt hierbei einen sehr steil ansteigenden Anbindungsbereich 4, während der mittlere, in Figur 2 dargestellte Bremstrommel einen sehr flach ansteigenden Anbindungsbereich 4 darstellt. Durch die Möglichkeit, verschiedene Anbindungsbereiche 4 an ein und demselben Mantelbereich 2 anordnen zu können, ist es vorteilhafterweise möglich, ein Bremstrommelsystem bereit zu stellen, bei welchem unabhängig vom Mantelbereich 2 die Bremstrommel an verschiedene Schnittstellen angepasst werden kann, indem jeweils der entsprechende Anbindungsbereich 4 an den Mantelbereich 2 angefügt wird.

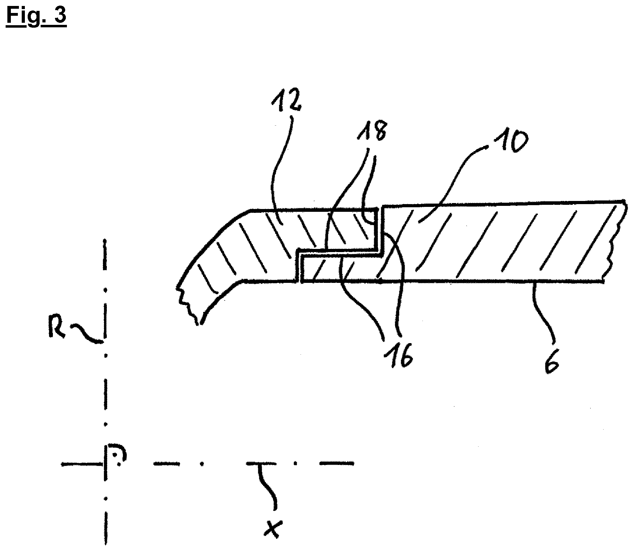

In Figur 3 ist eine Schnittansicht eines Verbindungsbereichs von Mantelbereich 2 und Anbindungsbereich 4 einer bevorzugten Ausführungsform der Bremstrommel dargestellt. Der Mantelbereich 2 weist in dessen ersten Verbindungsabschnitt 10 erste Verbindungsflächen 16 auf. Entsprechend weist der Anbindungsbereich 4 in dessen zweiten Verbindungsabschnitt 12 zweite Verbindungsflächen 18 auf. Die Verbindungsabschnitte 10, 12 sind hierbei derart gestaltet, dass diese eine Stufe ausbilden, indem die Verbindungsflächen 16, 18 einen sich parallel zur Rotationsachse x und einen sich senkrecht zur Rotationsachse x erstreckenden Bereich aufweisen. Hierbei ist es besonders vorteilhaft, wenn sich - in einer Radialrichtung R gesehen - der erste Verbindungsabschnitt 10 des zweiten Mantelbereichs 2 sich zumindest teilweise innerhalb des zweiten Verbindungsabschnitts 12 des Anbindungsbereichs 4 befindet, da bei einer Betätigung der Bremstrommel der Mantelbereich 2 einer stärkeren Erwärmung ausgesetzt wird und dazu neigt, sich auszudehnen, wodurch die Verbindung zwischen Mantelbereich 2 und Anbindungsbereich 4 zusätzlich verstärkt wird.

Im Übrigen ist es besonders vorteilhaft, wenn die Verbindungsflächen 16, 18 in Umfangsrichtung der Bremstrommel miteinander eine Hinterschneidung ausbilden, sodass eine Verdrehung des zweiten Mantelbereichs 2 zum Anbindungsbereich 4 verhindert wird. Eine derartige Hinterschneidung ist beispielsweise durch Ausbilden einer Verzahnung oder eines Wellenprofils an den Verbindungsflächen 16, 18 möglich.

### Bezugszeichenliste

- 2: Mantelbereich
- 4: Anbindungsbereich
- 6: Reibfläche
- 8: Montageabschnitt
- 10: erster Verbindungsabschnitt
- 12: zweiter Verbindungsabschnitt
- 14: Verschweißung
- 16: erste Verbindungsfläche
- 18: zweite Verbindungsfläche
- a, b: Erstreckung
- R: Radialrichtung
- x: Rotationsachse

## Patentansprüche

1. Bremstrommel, insbesondere eines Nutzfahrzeugs, umfassend einen Mantelbereich (2), welcher eine Reibfläche (6) aufweist, die rotationssymmetrisch zu einer Rotationsachse (x) angeordnet ist,
einen Anbindungsbereich (4), welcher einen Montageabschnitt (8) aufweist, wobei der Mantelbereich (2) und der Anbindungsbereich (4) aus unterschiedlichen Materialien ausgebildet und miteinander verbunden sind,
**dadurch gekennzeichnet, dass** der Mantelbereich (2) und der Anbindungsbereich (4) getrennt voneinander hergestellt sind, wobei der Mantelbereich (2) einen ersten Verbindungsabschnitt (10) und der Anbindungsbereich (4) einen zweiten Verbindungsabschnitt (12) aufweist, wobei der erste und der zweite Verbindungsabschnitt (10, 12) über eine Verschweißung (14) stoffschlüssig miteinander verbunden sind.

2. Bremstrommel nach Anspruch 1, wobei der Mantelbereich (2) zumindest teilweise, vorzugsweise vollständig, aus einem Metall-Matrix-Verbundwerkstoff, insbesondere Aluminium-Keramik-Verbundwerkstoff, ausgebildet ist.

3. Bremstrommel nach einem der vorhergehenden Ansprüche, wobei der Mantelbereich (2) zumindest teilweise, vorzugsweise vollständig, aus einem Material ausgebildet ist, das aus einer diskontinuierlichen Phase, vorzugsweise aus Keramikpartikeln, und einer kontinuierlichen Phase, vorzugsweise aus Aluminium, ausgebildet ist.

4. Bremstrommel nach einem der Ansprüche 2 oder 3, wobei das Volumen-Prozentverhältnis von Keramik-Partikeln zu Aluminium im Bereich von 0,4 bis 4, vorzugsweise 1 bis 4 und besonders vorzugsweise 1,5 bis 4liegt.

5. Bremstrommel nach einem der vorhergehenden Ansprüche, wobei der Anbindungsbereich (4) zumindest teilweise, vorzugsweise vollständig, aus einem homogenen Material, vorzugsweise Aluminium, Stahl oder einer Legierung, ausgebildet ist.

6. Bremstrommel nach einem der vorhergehenden Ansprüche, wobei der Mantelbereich (2) den ersten Verbindungsabschnitt (10) und der Anbindungsbereich (4) den zweiten Verbindungsabschnitt (12) aufweist, über welche der Mantelbereich (2) und der Anbindungsbereich (4) kraft- und/oder formschlüssig miteinander verbunden sind.

7. Bremstrommel nach Anspruch 6, wobei der erste und der zweite Verbindungsabschnitt (10, 12) kraft-und formschlüssig, insbesondere über Verbindungsmittel, miteinander verbunden sind.

8. Bremstrommel nach einem der Ansprüche 6 - 7, wobei der erste Verbindungsabschnitt (10) eine erste Verbindungsfläche (16) und der zweite Verbindungsabschnitt (12) eine zweite Verbindungsfläche (18) aufweisen, wobei die Verbindungsflächen (16, 18) vorzugsweise im Wesentlichen kongruent zueinander ausgebildet sind.

9. Bremstrommel nach Anspruch 8, wobei sich die Verbindungsflächen (16, 18) senkrecht, parallel und/oder geneigt zur Rotationsachse (x) erstrecken.

10. Bremstrommel nach einem der vorhergehenden Ansprüche, wobei das Verhältnis der Erstreckung (a) des Anbindungsbereichs (4) zu der Erstreckung (b) des Mantelbereichs (2) entlang der Rotationsachse (x) zwischen 0,05 bis 0,6, vorzugsweise zwischen 0,1 bis 0,5 und besonders vorzugsweise zwischen 0,17 bis 0,4 liegt.

## Claims

1. A brake drum, in particular for a utility vehicle, comprising
a shell portion (2) that has a friction face (6) which is arranged with rotational symmetry with respect to an axis of rotation (x),
an attachment portion (4) which has a mounting section (8), wherein the shell portion (2) and the attachment portion (4) are made of different materials and are connected to one another
**characterized in that**
the shell portion (2) and the attachment portion (4) are produced separately from one another, wherein the shell portion (2) has a first connection section (10) and the attachment portion (4) has a second connection section (12), wherein the first and second connection sections (10, 12) are connected to one another in a materially bonded manner by means of a weld (14).

2. The brake drum as claimed in claim 1, wherein the shell portion (2) is made at least partially and preferably entirely of a metal matrix composite material, in particular an aluminum-ceramic composite material.

3. The brake drum as claimed in one of the preceding claims, wherein the shell portion (2) is made at least partially and preferably entirely of a material that consists of a discontinuous phase, preferably ceramic particles, and a continuous phase, preferably aluminum.

4. The brake drum as claimed in either of claims 2 or 3, wherein the volumetric percentage ratio of ceramic particles to aluminum is in the range from 0.4 to 4, preferably 1 to 4 and particularly preferably 1.5 to 4.

5. The brake drum as claimed in one of the preceding claims, wherein the attachment portion (4) is made at least partially and preferably entirely of a homogeneous material, preferably aluminum, steel or an alloy.

6. The brake drum as claimed in one of the preceding claims, wherein the shell portion (2) has the first connection section (10) and the attachment portion (4) has the second connection section (12) via which the shell portion (2) and the attachment portion (4) are connected to one another in a force-fitting and/or form-fitting bonded manner.

7. The brake drum as claimed in claim 6, wherein the first and second connection sections (10, 12) are connected to one another in a force-fitting and form-fitting manner, in particular by means of connection means.

8. The brake drum as claimed in one of claims 6 - 7, wherein the first connection section (10) has a first connection face (16) and the second connection section (12) has a second connection face (18), wherein the connection faces (16, 18) are preferably made so as to be essentially congruent with respect to one another.

9. The brake drum as claimed in claim 8, wherein the connection faces (16, 18) extend perpendicular, parallel and/or at an angle to the axis of rotation (x).

10. The brake drum as claimed in one of the preceding claims, wherein the ratio of the extent (a) of the attachment portion (4) to the extent (b) of the shell portion (2) along the axis of rotation (x) is between 0.05 and 0.6, preferably between 0.1 and 0.5 and particularly preferably between 0.17 and 0.4.

## Revendications

1. Tambour de frein, en particulier d'un véhicule utilitaire, incluant :
une zone enveloppe (2), laquelle comporte une surface de friction (6), qui est agencée à symétrie de révolution autour d'un axe de révolution (x),
une zone de liaison (4), qui comporte une portion de montage (8), dans lequel la zone enveloppe (2) et la zone de liaison (4) sont réalisées avec des matériaux différents et sont reliées l'une à l'autre,
**caractérisé en ce que** la zone enveloppe (2) et la zone de liaison (4) sont fabriquées séparément l'une de l'autre, dans lesquels la zone enveloppe (2) comprend une première portion de jonction (10) et la zone de liaison (4) comprend une seconde portion de jonction (12), et la première et la seconde portion de jonction (10, 12) sont jointes l'une à l'autre par coopération de matières via une soudure (14).

2. Tambour de frein selon la revendication 1, dans lequel la zone enveloppe (2) est réalisée au moins partiellement, et de préférence entièrement, en un matériau composite à matrice de métal, en particulier en matériau composite aluminium-céramique.

3. Tambour de frein selon l'une des revendications précédentes, dans lequel la zone enveloppe (2) est réalisée au moins partiellement, et de préférence entièrement, en un matériau qui est réalisé à partir d'une phase discontinue, de préférence de particules céramiques, et d'une phase continue, de préférence en aluminium.

4. Tambour de frein selon l'une des revendications 2 ou 3, dans lequel le rapport en pourcentage volumétrique des particules céramiques sur l'aluminium est dans la plage de 0,4 à 4, de préférence de 1 à 4, et de manière particulièrement préférée de 1,5 à 4.

5. Tambour de frein selon l'une des revendications précédentes, dans lequel la zone de liaison (4) est réalisée au moins partiellement, et de préférence entièrement, en un matériau homogène, de préférence en aluminium, en acier ou en un alliage.

6. Tambour de frein selon l'une des revendications précédentes, dans lequel la zone enveloppe (2) comprend la première portion de jonction (10) et la zone de liaison (4) comprend la seconde portion de jonction (12), via lesquelles la zone enveloppe (2) et la zone de liaison (4) sont jointes l'une à l'autre par coopération de forces et/ou par coopération de formes.

7. Tambour de frein selon la revendication 6, dans lequel la première et la seconde portion de jonction (10, 12) sont jointes l'une à l'autre par coopération de forces et par coopération de formes, en particulier via des moyens de jonction.

8. Tambour de frein selon l'une des revendications 6 et 7, dans lequel la première portion de jonction (10) comporte une première surface de jonction (16) et la seconde portion de jonction (12) comporte une seconde surface de jonction (18), et les surfaces de jonction (16, 18) sont réalisées de préférence sensiblement en concordance l'une par rapport à l'autre.

9. Tambour de frein selon la revendication 8, dans lequel les surfaces de jonction (16, 18) s'étendent perpendiculairement, parallèlement et/ou de manière inclinée par rapport à l'axe de révolution (x).

10. Tambour de frein selon l'une des revendications précédentes, dans lequel le rapport de l'extension (a) de la zone de liaison (4) sur l'extension (b) de la zone enveloppe (2) le long de l'axe de révolution (x) est entre 0,05 à 0,6, de préférence entre 0,1 à 0,5, et de manière particulièrement préférée entre 0,17 à 0,4.
